# EUROPEAN PATENT APPLICATION

(11) **EP 3 618 205 A1**
(43) Date of publication of application: **04.03.2020**
(21) Application number: 19189929.3
(22) Date of filing: 02.08.2019
(51) Int. Cl.: H01S 3/06, G01C 19/66, H01S 3/083, H01S 3/16, H01S 3/17

(54) **ENHANCED SOLID-STATE GAIN MEDIUM FOR RING LASER GYROSCOPES**

(30) Priority: 17.08.2018 US 201816104813
(71) Applicant: Honeywell International Inc., Morris Plains, NJ 07950 (US)
(72) Inventor: TOUCHBERRY, Alan Bruce, Morris Plains, NJ 07950 (US); WU, Jianfeng, Morris Plains, NJ 07950 (US); VRIEZE, Lance, Morris Plains, NJ 07950 (US)
(74) Representative: Houghton, Mark Phillip

(57) **Abstract**

A multilayer mirror, ring laser gyroscope and method are disclosed. For example, the multilayer mirror includes a plurality of alternating layers of a high index of refraction optical material and a low index of refraction optical material, an amplification layer of an optical material disposed on the plurality of alternating layers, and a coating of an anti-reflective material disposed on an outermost surface of the optical material amplification layer.

## Description

### BACKGROUND

Ring Laser Gyroscopes (RLGs) have been utilized for decades in the inertial navigation field to measure angular motion or rotation. The concept of utilizing a ring laser to measure angular motion was first publicly disclosed in 1963. The ring laser utilized a low pressure Helium-Neon gas discharge for an active gain medium, and RLGs powered by a Helium-Neon gas discharge gain medium have been utilized ever since. Nevertheless, although the existing Helium-Neon gas discharge RLGs have performed suitably in the inertial navigation and other measurement fields, these Helium-Neon gas discharge RLGs have significant lifetime, reliability, performance and size limitations associated with the gas discharge itself. Also, Helium-Neon gas discharge RLGs are expensive to manufacture.

An RLG utilizing a solid-state gain medium instead of a Helium-Neon gas mixture is known. From a manufacturing standpoint, this solid-state gain medium RLG can provide significant savings over Helium-Neon gas discharge RLGs in terms of reduced size, labor and fabrication costs. Also, this solid-state gain medium RLG can provide significant technical advantages over Helium-Neon gas discharge RLGs in terms of increased reliability and lifetime.

A layer of Neodymium-doped silica (Nd-doped SiO₂) creates the cavity gain for the solid-state RLG. This layer of Nd-doped silica is deposited onto the top layer of a highly reflective, multilayer dielectric mirror in the cavity of the RLG. However, a significant problem that exists is that the index of refraction of the Neodymium-doped silica layer does not match the index of refraction of air or vacuum (e.g., in the cavity). Consequently, a substantial portion of the pump light (e.g., laser diode, flash lamp, LED) and laser signal is lost due to the reflection. For example, if the pump light source is a laser, such an increase in cavity loss does not only raise the laser threshold, but also increases the fundamental laser noise (Schawlow-Townes linewidth).

Therefore, the need exists for a technique that can be utilized to reduce the amount of light excitation energy that is lost and thereby enhance the performance of the solid-state RLG.

### SUMMARY

Embodiments disclosed herein present techniques for enhancing the durability and manufacturability of multilayer interference mirrors utilized as laser mirrors in RLG devices.

### DRAWINGS

Embodiments of the present disclosure can be more easily understood and further advantages and uses thereof more readily apparent, when considered in view of the description of the preferred embodiments and the following figures in which:
FIG. 1 is a simplified structural diagram illustrating a multilayer mirror that can be utilized to implement one example embodiment of the present invention.
FIG. 2 is a simplified structural diagram illustrating an enhanced gain mirror that can be utilized to implement one example embodiment of the present invention.
FIG. 3 is a simplified structural diagram illustrating an enhanced ring laser gyroscope (RLG) that can be utilized to implement one example embodiment of the present invention.
FIG. 4 is a flow diagram illustrating a method that can be utilized to implement one example embodiment of the present invention.

In accordance with common practice, the various described features are not drawn to scale but are drawn to emphasize features relevant to the present disclosure. Reference characters denote like elements throughout the figures and text.

### DETAILED DESCRIPTION

In the following detailed description, reference is made to the accompanying drawings that form a part hereof, and in which is shown by way of specific illustrative embodiments in which the embodiments may be practiced. These embodiments are described in sufficient detail to enable those skilled in the art to practice the embodiments, and it is to be understood that other embodiments may be utilized and that logical, mechanical and electrical changes may be made without departing from the scope of the present disclosure. The following detailed description is, therefore, not to be taken in a limiting sense.

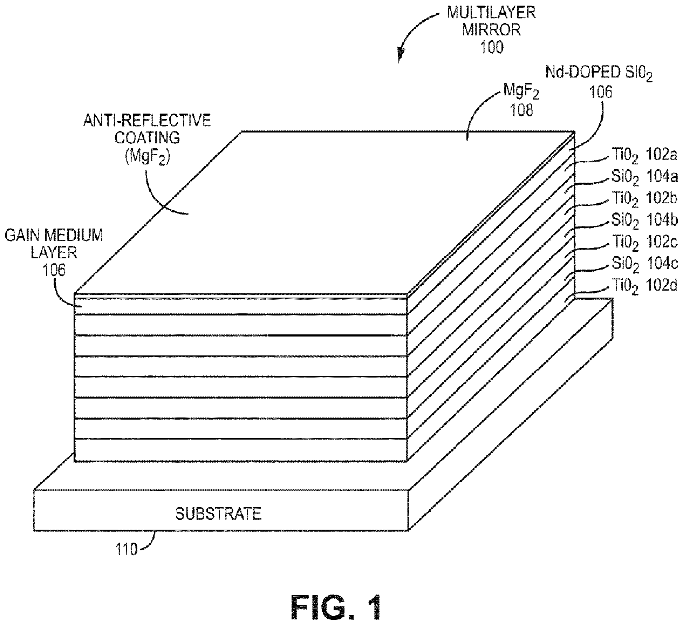

FIG. 1 is a simplified structural diagram illustrating an enhanced multilayer mirror 100, which can be utilized to implement one example embodiment of the present invention. For example, in one embodiment, the multilayer mirror 100 is an interference mirror of a plurality of interference mirrors for an RLG such as, for example, a solid-state gain medium RLG. More precisely, the multilayer mirror 100 is a highly reflective mirror stack including an outer layer of, for example, a first (e.g., dielectric) material that creates a gain medium for a solid-state RLG, and a top coating of a second (e.g., anti-reflective) material deposited onto the outer layer of material to enhance the transmittance of light energy into the outer layer and thereby enhance the emission efficiency of the ring laser of the solid state RLG.

Referring to the example embodiment illustrated in FIG. 1, the multilayer mirror 100 includes a plurality of alternating (e.g., interleaved) high index of refraction (e.g., Titanium Oxide or TiO₂) layers 102a-102d and low index of refraction (e.g., Silicon Oxide or SiO₂) layers 104a-104c formed on a suitable substrate 110. For example, in one embodiment, the TiO₂ layers 102a-102d and SiO₂ layers 104a-104c are optical quarter-wave (e.g., nominally or substantially quarter-wave) structures that are formed utilizing, for example, a suitable sputter deposition process (e.g., electron beam or ion beam deposition process). Notably, although a finite number of TiO₂ and SiO₂ layers are shown for this exemplary embodiment, this particular number of layers is merely for illustrative purposes and up to several more alternating TiO₂ and SiO₂ layers may be deposited to form the multilayer mirror 100. Also, for example, other suitable high index of refraction material layers can be utilized and interleaved with the SiO₂ layers in the multilayer mirror 100, such as Zirconium Oxide (ZrO₂), Tantalum (Ta₂O₅), Halfnium (HfO₂) or Niobium (Nb₂O₅).

The enhanced multilayer mirror 100 also includes an outermost (e.g., gain medium) layer 106 deposited onto the TiO₂ layer 102a. In one embodiment, the outermost layer 106 is a layer of Neodymium-doped silica (Nd-doped SiO₂). For example, the Nd-doped silica layer 106 can be several half-wavelengths (e.g., 2-5 wavelengths) thick. In any event, for this example embodiment, the Nd-doped silica layer 106 deposited onto the top of the multilayer mirror 100 creates a gain mirror that supplies optical amplification for the solid state ring laser involved. Notably, since the gain medium is composed of a solid state material instead of a Helium-Neon gas mixture, the conventional post-fabrication plasma scrubbing processes that typically damaged the coating materials (e.g., referred to as etching degradation) in the Helium-Neon RLGs are not utilized.

For this example embodiment, the multilayer mirror 100 also includes an anti-reflective coating 108 on the outermost surface of the gain medium layer 106. The anti-reflective top coating 108 can be formed by depositing (e.g., sputtering) a layer of a material having a suitably low surface reflectance (e.g., 0.1% to 0.2%). For this embodiment, a layer of Magnesium Fluoride (MgF₂) is utilized for the anti-reflective coating 108. In a second embodiment, any suitable material having a low surface reflectance of, for example, 0.1% or less can be utilized to form the anti-reflective coating 108. For example, in some embodiments, a suitable fluoropolymer material may be utilized to form the anti-reflective coating 108. As another example, a suitable material composed of mesoporous silica nanoparticles may be utilized to form the anti-reflective coating 108. As such, the anti-reflective coating 108 disposed on the gain medium layer 106 functions to increase the number of photons emitted by the Nd-doped silica (circulating within the ring laser cavity) that can re-enter the gain medium layer 106 and thereby stimulate the emission of additional photons. Consequently, the emission efficiency, gain and overall performance of the above-described ring laser are increased substantially (e.g., gain increased by several percentage points) over those of the existing ring lasers.

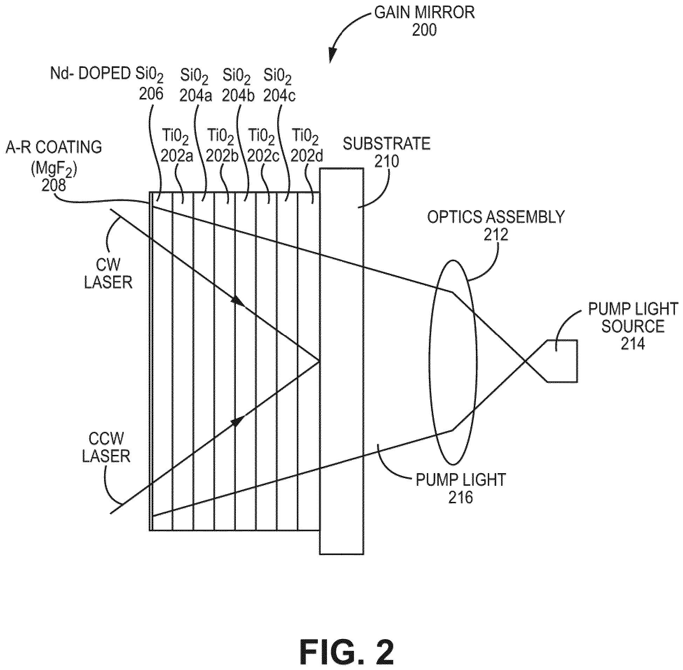

FIG. 2 is a simplified structural diagram illustrating an enhanced gain mirror 200, which can be utilized to implement one example embodiment of the present invention. For example, in one embodiment, the gain mirror 200 is an interference mirror of a plurality of interference mirrors for an RLG such as, for example, a solid-state gain medium RLG. Notably, for this example embodiment, the gain mirror 200 is substantially identical in structure and function to the multilayer mirror 100 illustrated in and described above with respect to FIG. 1.

Referring to FIG. 2, the gain mirror 200 includes a plurality of interleaved layers of high index of refraction materials 202a-202d and low index of refraction materials 204a-204c. A gain medium (e.g., Nd-doped silica) layer 206 is on the outermost (e.g., high index of refraction) layer 202a, and a layer 208 of an anti-reflective material (e.g., MgF₂) is on the gain medium layer 206. The interleaved layers 202a-204c are formed on a (e.g., highly polished) substrate 210. For this example embodiment, each one of the interleaved layers 202a-204c is substantially ¼ of an optical wavelength thick, and the (e.g., Nd-doped silica) gain medium layer 206 is an integer number of substantially ½ optical wavelengths thick. A pump light source (e.g., laser diode, flash lamp, LED) 214 transmits the pump light 216 to the gain medium layer 206 via a suitable focusing optics assembly 212. Note that although the pump light source 214 is depicted pumping light from the "back" (e.g., substrate) side of the gain mirror 200 for this example embodiment, in a second example embodiment, the pump light source 214 (e.g., and optics assembly 212) can be located at the left side of FIG. 2 so as to pump light from the opposite or "front" side of the gain mirror 200. Notably, in accordance with the above-described teachings of the present disclosure, the anti-reflective coating 208 functions to increase the number of photons emitted by the Nd-doped silica that can re-enter the gain medium layer 206 (e.g., photons circulating within the ring laser cavity and illustrated by the arrowed lines CW and CCW) and thereby stimulate the emission of additional photons.

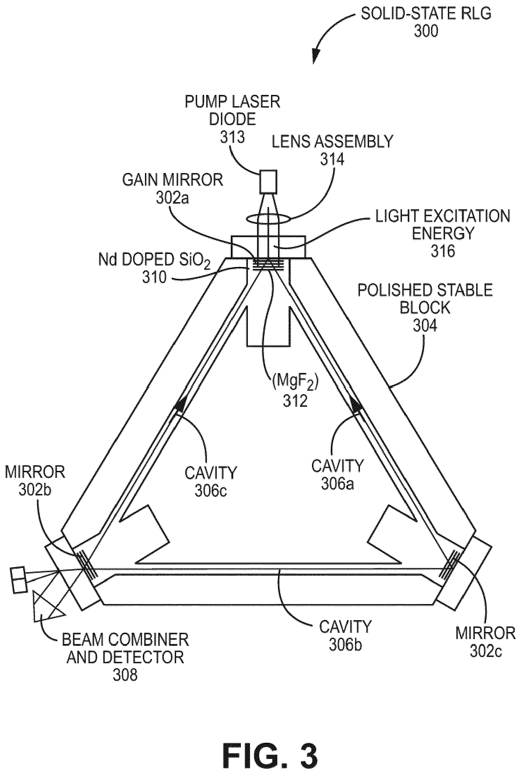

FIG. 3 is a simplified structural diagram illustrating an enhanced RLG 300, which can be utilized to implement one example embodiment of the present invention. For this example embodiment, the RLG 300 is a solid-state gain medium RLG. Referring to FIG. 3, the exemplary RLG 300 includes three highly reflective, multilayer dielectric mirrors 302a, 302b, 302c. These mirrors are mounted onto a polished, stable block of material 304, and positioned to define a closed loop optical cavity 306a-306c that is traversed by counter-propagating laser beams. A beam-combining optical system and detector 308 measures the difference in the frequencies of the counter-propagating laser beams, which difference is proportional to the rotation of the RLG 300. A thin, amorphous layer 310 of Nd-doped silica is deposited onto the mirror 302a, and thus creates a gain mirror 302a that supplies optical frequency amplification. Notably, in accordance with the above-described teachings of the present disclosure, an anti-reflective coating 312 (e.g., Magnesium Fluoride) is deposited onto the (e.g., gain medium) layer 310 to increase the number of photons emitted by the Nd-doped silica (circulating within the ring laser cavity 306a-306c) that can re-enter the gain medium layer 310 and thereby stimulate the emission of additional photons by the Nd-doped silica. A pump light source (e.g., laser diode) 313 and optical lens assembly 314 provide the light excitation energy 316 needed to generate the lasing action in the optical cavity 306a-306c.

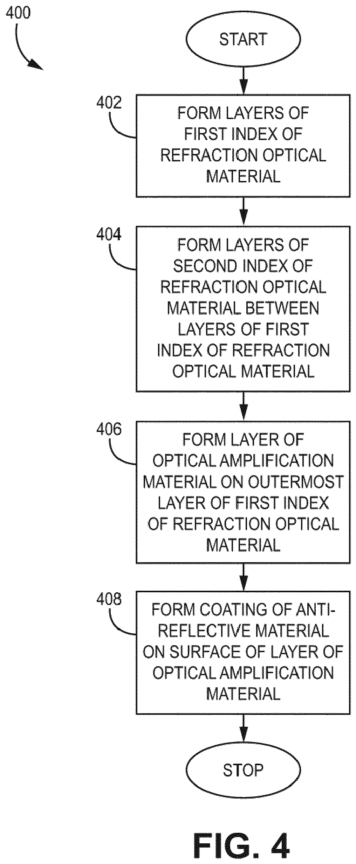

FIG. 4 is a flow diagram illustrating a method 400, which can be utilized to implement one example embodiment of the present invention. Referring to the example embodiment illustrated in FIG. 1, the exemplary method begins by forming a first plurality of layers 102a-102d of a high index of refraction optical material, such as, for example, TiO₂ (402), and also forming a second plurality of layers 104a-104c of a low index of refraction optical material, such as, for example, SiO₂, between the layers 102a-102d (404). More precisely, as illustrated in FIG. 1, a first layer 102d of TiO₂ is deposited (e.g., utilizing an electron beam or ion beam deposition process) on a substrate 110. A first layer 104c of SiO₂ is then deposited (e.g., also utilizing an electron beam or ion beam deposition process) on the exposed surface of the first layer 102d of TiO₂. Next, a second layer 102c of TiO₂ is deposited on the exposed surface of the first layer 104c of SiO₂, and then a second layer 104b f SiO₂ is deposited on the exposed surface of the second layer 102c of TiO₂. Next, a third layer 102b of TiO₂ is deposited on the exposed surface of the second layer 104b of SiO₂, and then a third layer 104a of SiO₂ is deposited on the exposed surface of the third layer 102b of TiO₂. A fourth layer 102a of TiO₂ is then deposited on the third layer 104a of SiO₂. Notably, although the exemplary embodiment illustrated in FIG. 1 depicts four layers 102a-102d of TiO₂ and three layers 104a-104c of SiO₂, the present disclosure is not intended to impose an upper or lower limit to the number of layers that can be utilized in other embodiments. Also, although the exemplary embodiment illustrated in FIG. 1 depicts layers of TiO₂ and SiO₂ for the layers 102a-102d and 104a-104c, the present disclosure is not intended to limit the high index of refraction and low index of refraction optical materials only to layers of TiO₂ and SiO₂ that can be utilized in other embodiments.

Returning to the method 400, a layer 106 of a suitable optical amplification material (e.g., Nd-doped silica in this embodiment) is deposited (e.g., utilizing an electron beam or ion beam deposition process) on the exposed surface of the outermost layer 102a of the high index of refraction optical material TiO₂ (406). The layer 106 provides the solid-state gain medium for the ring laser and thus the RLG involved. Next, an anti-reflective coating 108 (e.g., Magnesium Fluoride) is deposited onto the (e.g., gain medium) layer 110 (408). As described above with respect to FIG. 1, in accordance with the above-described teachings of the present disclosure, the anti-reflective coating 108 increases the number of photons emitted by the Nd-doped silica layer 106 (e.g., circulating within the ring laser cavity 306a-306c in FIG. 3) that can re-enter the gain medium layer 110 and thereby stimulate the emission of additional photons by the Nd-doped silica layer.

It should be understood that elements of the above described embodiments and illustrative figures may be used in various combinations with each other to produce still further embodiments which are explicitly intended as within the scope of the present disclosure.

### EXAMPLE EMBODIMENTS

Example 1 includes a multilayer mirror, comprising: a plurality of alternating layers of a high index of refraction optical material and a low index of refraction optical material; an amplification layer of an optical material disposed on the plurality of alternating layers; and a coating of an anti-reflective material disposed on an outermost surface of the optical material amplification layer.
Example 2 includes the multilayer mirror of Example 1, wherein the high index of refraction material comprises a Titanium Oxide (TiO2) layer of material.
Example 3 includes the multilayer mirror of any of Examples 1-2, wherein the low index of refraction material comprises a Silicon Oxide (SiO2) layer of material.
Example 4 includes the multilayer mirror of any of Examples 1-3, wherein the optical amplification layer comprises an Neodymium-doped silica (Nd-doped SiO2) layer of material.
Example 5 includes the multilayer mirror of any of Examples 1-4, wherein the anti-reflective material comprises a coating of a Magnesium Fluoride (MgF2) material.
Example 6 includes the multilayer mirror of any of Examples 1-5, wherein the plurality of alternating layers comprise a plurality of substantially optical quarter wavelength structures.
Example 7 includes the multilayer mirror of any of Examples 1-6, further comprising a substrate material under the plurality of alternating layers.
Example 8 includes the multilayer mirror of any of Examples 5-7, wherein the coating of the MgF2 material is substantially thinner than the thickness of each layer of the plurality of layers.
Example 9 includes the multilayer mirror of any of Examples 1-8, wherein the multilayer mirror comprises a reflective mirror for a laser cavity in a ring laser gyroscope (RLG).
Example 10 includes the multilayer mirror of any of Examples 5-9, wherein the coating of the MgF2 material is configured to attain a reflectance value of 0.1% or lower.
Example 11 includes a ring laser gyroscope, comprising: a laser block assembly; a cavity in the laser block assembly; and a plurality of multilayer mirrors in the cavity, wherein at least one multilayer mirror of the plurality of multilayer mirrors comprises: a plurality of alternating layers of a high index of refraction optical material and a low index of refraction optical material; an amplification layer of an optical material disposed on the plurality of alternating layers; and a coating of an anti-reflective material disposed on an outermost surface of the optical material amplification layer.
Example 12 includes the ring laser gyroscope of Example 11, wherein the optical amplification layer comprises a Nd-doped SiO2 layer of material.
Example 13 includes the ring laser gyroscope of any of Examples 11-12, wherein the coating of the anti-reflective material comprises a coating of an MgF2 material.
Example 14 includes the ring laser gyroscope of any of Examples 11-13, wherein the plurality of multilayer mirrors comprises three or more multilayer reflective mirrors.
Example 15 includes the ring laser gyroscope of any of Examples 11-14, wherein the high index of refraction optical material comprises Titanium Oxide and the low index of refraction optical material comprises Silicon Oxide.
Example 16 includes a method, comprising: forming a plurality of layers of a first index of refraction optical material on a substrate; forming a plurality of layers of a second index of refraction optical material between the layers of the first index of refraction optical material; forming a layer of an optical amplification material on an outermost layer of the plurality of layers of the first index of refraction optical material; and forming a coating of an anti-reflective material on a surface of the layer of the optical amplification material.
Example 17 includes the method of Example 16, wherein the forming the plurality of layers of the first index of refraction optical material comprises forming layers of Titanium Oxide.
Example 18 includes the method of any of Examples 16-17, wherein the forming the plurality of layers of the second index of refraction optical material comprises forming layers of Silicon Oxide.
Example 19 includes the method of any of Examples 16-18, wherein the forming the layer of the optical amplification material comprises forming a layer of Nd-doped silica.
Example 20 includes the method of any of Examples 16-19, wherein the forming the coating comprises forming a coating of Magnesium Fluoride.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the presented embodiments. Therefore, it is manifestly intended that embodiments be limited only by the claims and the equivalents thereof.

## Claims

1. A multilayer mirror, comprising:
a plurality of alternating layers of a high index of refraction optical material and a low index of refraction optical material;
an amplification layer of an optical material disposed on the plurality of alternating layers; and
a coating of an anti-reflective material disposed on an outermost surface of the optical material amplification layer.

2. The multilayer mirror of claim 1, wherein the high index of refraction material comprises a Titanium Oxide (TiO2) layer of material.

3. The multilayer mirror of claim 1, wherein the low index of refraction material comprises a Silicon Oxide (SiO₂) layer of material.

4. The multilayer mirror of claim 1, wherein the optical amplification layer comprises an Neodymium-doped silica (Nd-doped SiO₂) layer of material.

5. The multilayer mirror of claim 1, wherein the anti-reflective material comprises a coating of a Magnesium Fluoride (MgF₂) material.

6. The multilayer mirror of claim 1, wherein the plurality of alternating layers comprise a plurality of substantially optical quarter wavelength structures.

7. The multilayer mirror of claim 1, further comprising a substrate material under the plurality of alternating layers.

8. The multilayer mirror of claim 5, wherein the coating of the MgF₂ material is substantially thinner than the thickness of each layer of the plurality of layers.

9. The multilayer mirror of claim 1, wherein the multilayer mirror comprises a reflective mirror for a laser cavity in a ring laser gyroscope (RLG).

10. The multilayer mirror of claim 5, wherein the coating of the MgF₂ material is configured to attain a reflectance value of 0.1% or lower.
